# FASCICULE DE BREVET EUROPEEN

(11) **EP 3 127 374 B1**
(45) Date de publication et mention de la délivrance du brevet: **26.06.2019**
(21) Numéro de dépôt: 15718971.3
(22) Date de dépôt: 27.03.2015
(51) Int. Cl.: H04W 48/18, H04W 12/06, H04L 29/06, H04W 8/18, H04W 88/06, H04W 88/10

(54) **ACCÈS SÉCURISÉ À UN RÉSEAU ÉTENDU VIA UN RÉSEAU DE COMMUNICATION MOBILE**
SICHER ZUGRIFF AUF EIN WAN ÜBER EIN MOBILKOMMUNIKATIONSNETZWERK
SECURELY ACCESSING A WIDE AREA NETWORK VIA A MOBILE COMMUNICATION NETWORK

(30) Priorité: 02.04.2014 FR 1452904
(43) Date de publication de la demande: 08.02.2017
(73) Titulaire: Orange, 75015 Paris (FR)
(72) Inventeur: AUVRAY, Vincent, F-50460 Tonneville (FR); DE LA FOREST DIVONNE, Aymeric, F-14650 Carpiquet (FR)
(74) Mandataire: Regimbeau
(86) Numéro de dépôt international: PCT/FR2015/050803
(87) Numéro de publication internationale: WO 2015/150675

(56) Documents cités:
- EP-A1- 2 391 179
- EP-A1- 2 670 171
- US-A1- 2011 149 928
- US-A1- 2013 139 221
- NOVATEL WIRELESS: "MIFI - User Guide", 20091231 , 31 décembre 2009 (2009-12-31), pages 1-108, XP002615789, Extrait de l'Internet: URL:http://www3.ipass.com/wp-content/uploa ds/2010/10/Novatel_MiFi_UserGuide.pdf [extrait le 2011-01-06]

## Description

### DOMAINE TECHNIQUE GENERAL

La présente invention concerne un dispositif pour l'accès à un réseau étendu via un réseau de communication mobile.

### ETAT DE L'ART

On connait de nombreux dispositifs pour l'accès à un réseau étendu, par exemple le réseau Internet, via un réseau de communication mobile. Ils permettent notamment à un utilisateur de continuer à utiliser Internet dans tous ses déplacements.

Ces dispositifs sont couramment appelés « modem/routeur 3G/4G » (selon la technologie du réseau de communication mobile auquel ils se connectent) et se présentent sous la forme d'un boitier de petite taille équipé d'une antenne interne, d'une carte SIM d'un opérateur du réseau de communication mobile, et disposant d'une interface de connexion avec un équipement (auquel le dispositif fournit un accès à Internet), typiquement un ordinateur portable. On appelle ce partage de connexion le « tethering ».

Cette interface est le plus souvent une connectique filaire de type USB (« Universal Serial Bus »), d'où la dénomination « clé » 3G/4G souvent donnée à ces dispositifs, mais elle peut également être une liaison sans fil WiFi et/ou Bluetooth (la dénomination de « galet » 3G/4G est alors rencontrée). Le modem cumule généralement plusieurs connectivités.

La connexion sans fil offre de nombreux avantages. En particulier, d'une part l'accès à Internet peut être fourni à une pluralité d'équipements, et d'autre part la portée moyenne du WiFi ou du Bluetooth fait qu'il est possible d'éloigner le dispositif de sorte à le placer en un endroit ou la réception du réseau de communication sans fil est la meilleure (par exemple en hauteur, loin de tout objet métallique, etc.).

Les terminaux mobiles de type smartphones incorporent de plus en plus souvent des fonctionnalités de modem 3G/4G. En effet, les smartphones disposent de moyens de communication sans fil pouvant être configurés en point d'accès (« access point », AP). D'autres terminaux peuvent ainsi s'y connecter et partager le lien 3G/4G vers Internet.

Aujourd'hui, il est possible d'utiliser sur ces modems 3G/4G des techniques de contrôle d'accès tels que les « portails captifs » que l'on trouve sur les bornes Wi-Fi de type « hotspot ».

Ces techniques utilisent une brique logicielle (par exemple de type « CoovaChili ») forçant les clients à afficher une page spéciale (le plus souvent demandant une authentification, un paiement ou simplement l'acceptation de conditions générales d'utilisation) avant d'accéder à Internet normalement. Cela est par exemple obtenu en interceptant tous les paquets quelles que soient leurs destinations jusqu'à ce que l'utilisateur ouvre son navigateur web et essaie d'accéder à Internet. Le navigateur est alors redirigé vers une page web prédéterminée.

Cela permet de faire payer l'accès à Internet à des clients (par exemple si le dispositif est installé dans un hôtel ou un bar), de surveiller les trafics associés (mise en place d'une limite de consommation de données), ou encore de bloquer des utilisations abusives.

Toutefois, on constate que l'utilisation de portails captifs sur de tels dispositifs présente des failles de sécurité, en particulier si le dispositif est un smartphone configuré en partage de connexion. En effet, le dispositif s'authentifie traditionnellement auprès d'un serveur de gestion via un client appelé contrôleur d'accès (par exemple conformément au protocole « RADIUS », Remote Authentication Dial-In User Service) que l'on sait contourner, par exemple grâce à un logiciel malveillant installé sur le dispositif qui infecterait le client ou qui intercepterait les données qu'il reçoit ou émet.

US 2011/149928 décrit un hotspot qui comprend un premier module adapté pour créer un réseau WiFi et un deuxième module adapté pour se connecter à un réseau 3G ou 4G; un canal, contrôlé par le processeur du hotspot permet la connexion entre les deux modules.

EP2670171 décrit un appareil (mobile phone ou "USB dongle") permettant à un autre téléphone mobile d'utiliser sa connexion à un réseau cellulaire à travers de sa carte SIM et après avoir être identifié.

EP2391179 décrit un autre hotspot mobile.

US 2013/139221 décrit l'authentification à travers du web d'un téléphone mobile qui passe d'un réseau cellulaire à un réseau WLAN.

L'invention vient améliorer la situation.

### PRESENTATION DE L'INVENTION

La présente invention se rapporte à un dispositif mobile selon la revendication 1 et à un procédé selon la revendication 4.

La présente invention se rapporte ainsi à selon un premier aspect à un dispositif pour l'accès à un réseau étendu via un réseau de communication mobile, comprenant un premier module de connexion au réseau de communication mobile, un deuxième module de connexion adapté pour générer un réseau local, un module de traitement de données et une carte d'identification d'abonné, le module de traitement de données étant configuré pour connecter le premier et le deuxième module de connexion via un canal, le dispositif étant caractérisé en ce que la carte d'identification d'abonné est configurée pour mettre en oeuvre un module de contrôle adapté pour contrôler l'utilisation dudit canal.

Dans la mesure où une carte d'identification d'abonné de type SIM est un module de sécurité dont l'accès est réservé à des applications bien spécifiques de l'opérateur, les logiciels malveillants ne sont plus capables de leurrer le contrôleur d'accès.

Selon d'autres caractéristiques avantageuses et non limitatives :
- Le dispositif est un terminal mobile de type smartphone.
   Il s'agit en effet du type de dispositif le plus susceptible d'être sujet à l'installation d'applications malveillantes ;
- ledit canal est une interface TUN.
   TUN est particulièrement adapté pour contrôler de façon efficace et fiable le trafic entre le premier et le deuxième module de connexion ;
- ledit module de contrôle mis en oeuvre par la carte d'abonné est adapté pour pour communiquer de façon sécurisée avec un serveur de gestion via le réseau de communication mobile.
   Le fait que la carte SIM embarque également un client d'authentification communiquant avec un serveur distant garantit que l'authentification est incontestable ;
- lequel ledit module de contrôle est un module CoovaChili.
   Il s'agit d'un module connu ayant fait ses preuves et pouvant être embarqué sur la carte SIM ;
- le module de contrôle mis en oeuvre par la carte d'abonné est configuré pour communiquer avec le serveur de gestion conformément au protocole Remote Authentication Dial-In User Service (RADIUS).
RADIUS garantit le chiffrement des données entre le client embarqué et le serveur, ce qui fait que les données d'authentification ne peuvent être falsifiées.

Selon un deuxième aspect, l'invention concerne un système comprenant un dispositif selon le premier aspect de l'invention, un serveur de gestion, et au moins un équipement connecté audit réseau local.

Selon un troisième aspect, l'invention concerne un procédé de routage de données par un dispositif pour l'accès à un réseau étendu via un réseau de communication mobile, comprenant un premier module de connexion au réseau de communication mobile, un deuxième module de connexion adapté pour générer un réseau local, un module de traitement de données et une carte d'identification d'abonné, le procédé étant caractérisé en ce qu'il comprend la mise en oeuvre par la carte d'identification d'abonné d'étapes de :
(a) Réception d'une requête d'activation d'une connexion entre le premier et le deuxième module de connexion ;
(b) Génération d'un canal entre le premier et le deuxième module de connexion dans le module de traitement de données ;
(c) Réception depuis un équipement connecté audit réseau local d'au moins une information d'authentification ;
(d) Authentification de l'équipement en fonction de ladite information d'authentification ;
(e) Ouverture dudit canal si l'équipement est authentifié.

Selon d'autres caractéristiques avantageuses et non limitatives :
- un serveur de gestion est connecté au dispositif via ledit réseau de communication mobile, l'étape (d) comprenant l'envoi à destination du serveur de gestion d'une requête d'authentification comprenant ladite information d'authentification, et la réception depuis le serveur de gestion d'une réponse de validation ou non de l'authentification.
   Ce mode de réalisation permet la mise en oeuvre du procédé avec très peu de modification des systèmes existants (en particulier carte SIM) ;
- un serveur de gestion est connecté au dispositif via ledit réseau de communication mobile, l'étape (d) comprenant la réception depuis le serveur de gestion d'informations d'authentification de référence, et la comparaison entre l'au moins une information d'authentification reçue depuis l'équipement et lesdites d'informations d'authentification de référence.
   Ce mode de réalisation permet une sécurité accrue, puisque l'authentification est réalisée directement dans la carte SIM. De plus, ce mode décharge le serveur de cette étape d'authentification. Il en résulte une diminution d'utilisation des ressources physiques et/ou logicielles sur le serveur de gestion et sur le réseau qui s'intercale entre le dispositif et le serveur de gestion.
- une page d'authentification est stockée sur la carte d'identification d'abonné permettant la saisie d'informations d'identification, l'étape (c) comprenant la transmission à l'équipement de ladite page d'authentification.
   Cela permet de sécuriser encore davantage les techniques de portail captif, puisque la carte SIM gère ainsi l'intégralité des opérations de la saisie des informations d'authentification à leur validation ;
- l'étape (a) comprend la réception et la vérification d'un numéro d'identification personnel (PIN) de la carte d'identification d'abonné sur une interface utilisateur du dispositif.
   Cette saisie du code PIN est une sécurité supplémentaire offerte par l'utilisation de la carte SIM ;
- l'étape (b) comprend la fermeture de tout lien entre le premier et le deuxième module de connexion dans le module de traitement de données autre que le canal. Cela prévient que d'autres chemins soient utilisés et permet d'utiliser le présent procédé avec n'importe quel matériel existant.

Selon un quatrième et un cinquième aspect, l'invention concerne un produit programme d'ordinateur comprenant des instructions de code pour l'exécution d'un procédé selon le troisième aspect de routage de données par un dispositif pour l'accès à un réseau étendu via un réseau de communication mobile ; et des moyens de stockage lisibles par un équipement informatique sur lesquels un produit programme d'ordinateur comprend des instructions de code pour l'exécution d'un procédé selon le troisième aspect de routage de données par un dispositif pour l'accès à un réseau étendu via un réseau de communication mobile.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma du dispositif pour l'accès à un réseau étendu selon l'invention ;
- la figure 2 représente une architecture logicielle mise en oeuvre dans le dispositif selon l'invention ;
- la figure 3 représente une séquence d'activation d'une connexion internet par le dispositif selon l'invention.

### DESCRIPTION DETAILLEE

### Architecture

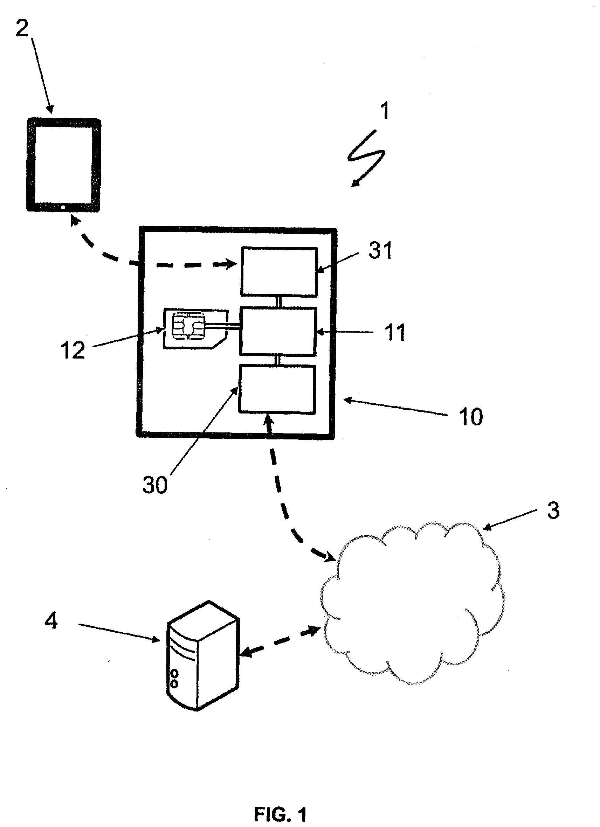

L'architecture du présent dispositif 1 pour l'accès à un réseau étendu via un réseau de communication mobile 3 est illustrée par la **figure 1**.

Le réseau étendu est un réseau WAN (« Wide Area Network »), en particulier le réseau Internet (lequel sera pris comme exemple de WAN préféré dans la suite de la présente demande). Comme expliqué précédemment, ce dispositif 1 se connecte d'une part à un réseau 3 de communication mobile, typiquement un réseau de téléphonie mobile de type 3G ou 4G relié au réseau WAN (on comprendra toutefois que l'invention n'est limitée à aucun type de réseau de communication mobile), et d'autre part à un ou plusieurs équipements 2 (sur la figure 1 une tablette tactile), auxquels il va apporter l'accès au WAN (Internet). Le dispositif 1 est avantageusement un terminal mobile de type smartphone, etc.

Le dispositif 1 comprend un boitier 10 qui héberge les composants électroniques du dispositif 1.

Parmi ceux-ci on trouve un module de traitement de données 11, un premier module de connexion 30, un deuxième module de connexion 31, et une carte d'identification d'abonné 12 d'un opérateur du réseau de communication mobile 3. Une batterie peut être également présente.

Par « carte d'identification d'abonné », on entend tout circuit intégré capable d'assurer les fonctions d'identification d'un abonné à un réseau via des données qui y sont stockées, et tout particulièrement une carte « SIM » (de l'anglais « Subscriber Identity Module »), ou une carte « e-UICC » (pour « (embedded)-Universal Integrated Circuit Card ») comprenant des moyens de traitement de données sous la forme d'un microcontrôleur et de la mémoire de type « EEPROM » (pour « Electrically-Erasable Programmable Read-Only Memory »), ou flash. Dans la suite de la présente demande, à titre d'exemple on désignera couramment la carte d'indentification d'abonné 2 comme carte SIM, mais on comprendra que l'invention n'est pas limitée uniquement à cette technologie.

Le module de traitement de données 11, qui prend par exemple la forme d'un processeur, assure les fonctions de modem du dispositif 1.

Le premier module de connexion 30 est un module de connexion sans fil permettant la connexion au réseau de communication mobile 3.

Ce module de connexion sans fil 30 est connecté au module de traitement de données 11, lui-même relié au deuxième module de connexion 31 (qui est avantageusement également un module de connexion sans fil, qui peut être éventuellement partiellement confondu avec le premier module de connexion sans fil 30, par exemple en partageant son antenne) et à la carte d'identification d'abonné 12.

Le deuxième module de connexion 31 est adapté pour générer un réseau local, de façon préférée un réseau local sans fil. Dans la suite de la présente description, on supposera que chaque module 30, 31 est un module de communication sans fil, et on prendra l'exemple d'un module de connexion Wi-Fi, mais on comprendra que l'invention n'est pas limitée à cette technologie (on pense par exemple au Bluetooth). La connexion peut également être filaire, même si un réseau sans-fil est préféré (puisqu'il permet plusieurs connexions simultanées). L'équipement 2 se connecte à ce réseau local sans fil via un module propre de communication sans fil.

### Contrôle d'accès

Un serveur de gestion 4 est connecté au réseau mobile 3 via le réseau WAN. Ce serveur de gestion 4 est une plateforme de type « hotspot manager » pour le contrôle de la fourniture d'un accès au WAN à tout équipement 2 connecté au dispositif 1. Il permet la mise en oeuvre de techniques de «portail captif » évoquées précédemment en communiquant avec un contrôleur d'accès mis en oeuvre sur le dispositif 1.

En particulier, le contrôleur d'accès est capable d'ouvrir un canal entre les premier et deuxième modules de connexion 30, 31 de sorte à contrôler tout le trafic échangé entre les deux modules 30 et 31, et le bloquer/le rediriger le cas échéant. En d'autres termes, le contrôleur d'accès est un module de contrôle dudit canal, dont il contrôle l'utilisation. Ce canal peut être compris comme un « tunnel virtuel », c'est-à-dire un composant logiciel (par exemple une interface TUN) simulant un périphérique physique (de routage en couche 3 OSI) dans le noyau réseau. Plus précisément, le canal assure au sein du système d'exploitation une encapsulation/désencapsulation de données entre l'interface contrôlant le premier module de connexion 30 (interface avec le réseau mobile 3) et l'interface contrôlant le deuxième module de connexion 31, comme s'ils étaient deux périphériques réseaux physiques directement connectés par un tunnel. On comprendra ainsi que le canal est bien un élément logiciel qui permet « d'étanchéifier » les communications entre le premier et le deuxième module 30, 31.

Le contrôleur d'accès est en outre configuré pour demander à un équipement 2 souhaitant accéder au WAN des informations d'authentification telles qu'un identifiant (par exemple un MSISDN « Mobile Station ISDN Number » (i.e un numéro de téléphone), un IMEI « International Mobile Equipment Identity », une adresse MAC « Media Access Control », etc.) et un mot de passe. Il génère alors (par exemple selon le protocole RADIUS mentionné) une requête de connexion contenant lesdites informations d'authentification. Le serveur 4 traite la requête et répond au contrôleur d'accès en autorisant ou non la connexion. Selon la réponse, le contrôleur d'accès accepte ou non la connexion de l'équipement 2 au WAN en ouvrant ou non le canal entre les premier et deuxième modules de connexion 30, 31.

Il est à noter qu'une pluralité d'échanges entre le client et le serveur 4 est parfois nécessaire avant de valider ou non la connexion de l'équipement 2 au WAN.

### Carte d'identification d'abonné

Le dispositif 1 se distingue en ce que le contrôleur d'accès est mis en oeuvre non pas par le module de traitement 11, mais par la carte d'identification d'abonné 12. Cela permet d'éviter de réaliser l'authentification dans le kernel-space (espace noyau) ou le user-space (espace utilisateur) du système d'exploitation du dispositif 1, dans lesquels un programme malicieux peut être installé (programme corrompant le contrôleur d'accès de sorte à ouvrir le canal même sans authentification)

Or, une carte d'identification d'abonné 12 est un dispositif physique de confiance quasi-impossible à pirater (classé comme un « secure element », c'est-à-dire un module de sécurité), car l'installation d'applications dans ces cartes est limitée à des entités bien identifiées, et contrôlées par l'opérateur.

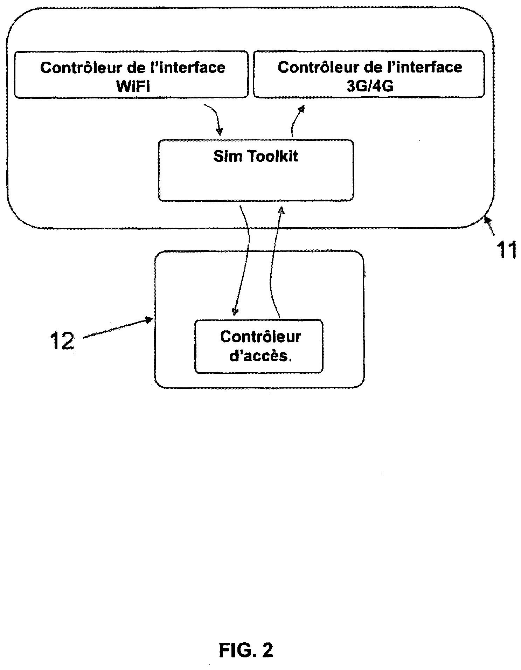

En référence à la **figure 2**, le présent dispositif 1 isole ainsi le contrôleur d'accès des moyens de traitement de données 11, qui mettent en oeuvre un « Sim Toolkit » (Module logiciel de communication avec la carte d'identification d'abonné), et les contrôleurs des interfaces Wi-Fi et mobile (en d'autre termes les interfaces associées respectivement au premier et au deuxième module de connexion 30, 31).

Selon un deuxième aspect, l'invention concerne un système comprenant le dispositif 1 pour l'accès à un réseau étendu WAN (Internet) via un réseau de communication mobile 3 tel que décrit, le serveur de gestion 4, et au moins un équipement 2 connecté au réseau local (Wi-Fi) généré par le deuxième module de connexion 30. Ce système est représenté par la figure 1.

### Procédé

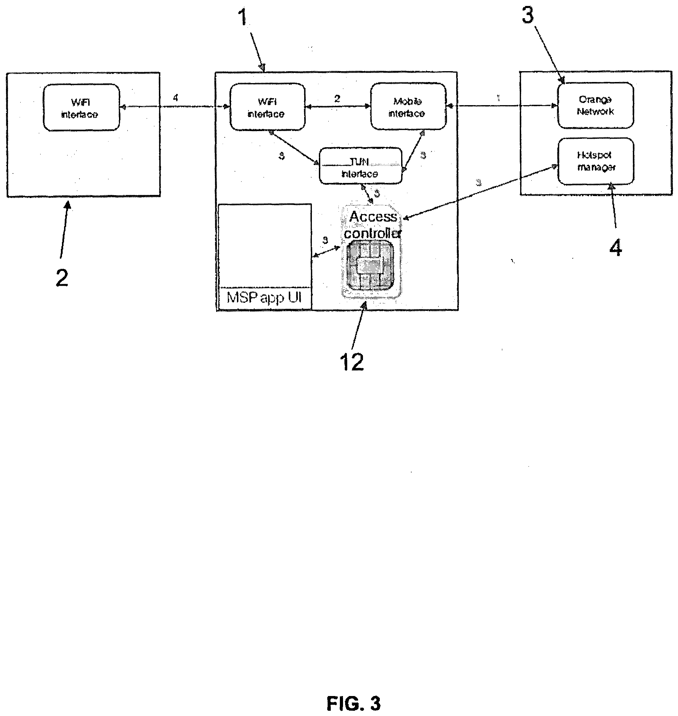

Selon un troisième aspect est proposé un procédé de routage de données par le dispositif 1 pour l'accès à un réseau étendu WAN (Internet) via un réseau de communication mobile 3. Ce procédé définit l'enchainement d'étapes mises en oeuvre par la carte d'identification d'abonné 12 permettant à l'équipement 2 d'accéder au WAN. Il est illustré en particulier par la **figure 3**, qui représente plus en détail une séquence d'activation d'une connexion internet par le dispositif 1 (dans l'exemple représenté le dispositif 1 est un terminal mobile mettant en oeuvre une application appelée « MSPapp » permettant cette connexion).

Préliminairement, le dispositif 1 initie une connexion au réseau de communication mobile 3 (via le premier module 30), et active le tethering. Cela consiste à la mise en route du deuxième module 31 (de sorte à générer le réseau local), et à la définition d'une configuration de réseau (démarrage d'un serveur DHCP « Dynamic Host Control Protocol », d'un serveur DNS « Domain Name System », mise en place d'une politique de routage IP, etc.).

Dans une première étape (a), la carte d'identification d'abonné reçoit une requête d'activation d'une connexion entre le premier et le deuxième module de connexion 30, 31. Cette requête peut être émise suite au lancement de l'application précitée MSPapp sur le dispositif 1, et son exécution peut être soumise à la saisie sur une interface utilisateur (par exemple l'écran du smartphone) d'un code PIN, c'est-à-dire un numéro d'identification personnel, de la carte d'identification d'abonné 12. Si le numéro est valide, la carte traite la requête.

A ce stade un lien entre les interfaces des premier et deuxième modules de connexion 30, 31 peut temporairement être créé dans le système d'exploitation, mais les premier et deuxième modules 30, 31 ne peuvent pas encore communiquer entre eux des données.

Dans une deuxième étape (b), un canal (interface TUN) est généré entre le premier et le deuxième module de connexion 30, 31 dans le module de traitement de données 11. Toute connexion autre entre ces premier et deuxième modules de connexion 30, 31 est fermée, de sorte à ce que tout paquet de données doive transiter par le canal. Ce dernier n'est pour le moment pas encore ouvert.

Le module contrôleur d'accès mis en oeuvre par la carte d'identification d'abonné 11 inclut avantageusement un client RADIUS, avec lequel il va pouvoir dialoguer avec le serveur de gestion 4 distant pour réaliser l'authentification de tout équipement 2 connecté au réseau local et souhaitant accéder au WAN. Le client reçoit depuis l'équipement 2 au moins une information d'authentification, préférentiellement deux dont un identifiant unique et un code. Cette étape (c) peut prendre la forme d'une transmission à l'équipement 2 d'une page d'authentification permettant la saisie d'informations d'identification (le « portail captif »), stockée sur la carte d'identification d'abonné 12.

Cette ou ces information(s) permettent dans une étape (d) l'authentification (ou non) de l'équipement 2. Elles peuvent être envoyées à destination du serveur de gestion 4 dans une requête d'authentification. Le serveur traite la requête par exemple en comparant l'identifiant avec une liste d'identifiants en liste blanche/noire, vérifie que le code est valide, etc.

Alternativement, c'est la carte d'identification d'abonné 12 qui réalise la comparaison. Pour cela, le l'étape (d) comprend la réception depuis le serveur de gestion 4 d'informations d'authentification de référence. De façon générale, le serveur 4 peut déléguer à la carte d'identification d'abonné 12 les droits d'accès de manière à ce que cette dernière gère l'authentification.

Il est à noter qu'il est même possible qu'il n'y ait pas besoin du serveur 4, si par exemple les informations d'authentification de référence sont pré-chargées par l'opérateur avant que la carte 12 ne soit fournie à l'utilisateur. Cela permet une sécurité absolue puisque la carte SIM devient autonome.

Dans le cas le plus courant où c'est le serveur 4 qui réalise l'authentification (solution qui permet de déporter la majorité de la puissance de calcul et des données nécessaires) le serveur 4 renvoie (après éventuellement plusieurs aller-retour s'il a besoin d'autres informations d'authentification) une réponse soit de validation de l'authentification, soit de rejet de l'authentification. Il est à noter que tous les échanges entre le module contrôleur (au sein de la carte 12) et le serveur 4 transitent par le module de traitement de données 11, mais sont chiffrés. En d'autres termes, quand bien même une application malveillante serait installée dans le système d'exploitation elle ne pourra pas influer sur l'authentification car le module de traitement 11 n'est pas capable de lire les données relatives à l'authentification qui transitent par lui.

En cas de rejet de l'authentification (équipement 2 non authentifié), le contrôleur d'accès maintient le canal fermé : l'équipement 2 ne peut pas accéder au WAN. En cas de validation de l'authentification (équipement 2 authentifié), le contrôleur d'accès ouvre (au moins partiellement) le canal de sorte à autoriser la communication entre les premier et deuxième modules 30, 31 (étape (e)). Une surveillance du trafic peut être mise en oeuvre de sorte à fermer ultérieurement le canal si un seuil est par exemple atteint.

Il est à noter que ce procédé peut s'appliquer sans difficultés à des terminaux existants en changeant la carte d'identifications d'abonnés et en réalisant une mise à jour du système d'exploitation.

### Produit programme d'ordinateur

Selon un quatrième et un cinquième aspects, l'invention concerne un produit programme d'ordinateur comprenant des instructions de code pour l'exécution (en particulier sur la carte d'identification d'abonné 12 du dispositif 1) d'un procédé selon le troisième aspect de l'invention de routage de données par le dispositif 1, ainsi que des moyens de stockage lisibles par un équipement informatique (par exemple une mémoire de la carte d'identification d'abonné 12 du dispositif 1) sur lequel on trouve ce produit programme d'ordinateur.

## Revendications

1. Dispositif (1) pour l'accès à un réseau étendu via un réseau de communication mobile (3), comprenant un premier module de connexion (30) au réseau de communication mobile (3), un deuxième module de connexion (31) adapté pour générer un réseau local, un module de traitement de données (11) et une carte d'identification d'abonné (12), le module de traitement de données (11) étant configuré pour connecter le premier et le deuxième module de connexion (30, 31) via un canal, le dispositif (1) étant **caractérisé en ce que** la carte d'identification d'abonné (12) est configurée pour mettre en oeuvre un contrôleur d'accès, à travers un client d'authentification embarqué sur ladite carte d'identification, adapté pour contrôler l'utilisation dudit canal.

2. Dispositif selon la revendication 1, dans lequel ledit contrôleur d'accès mis en oeuvre par la carte d'abonné (12) est également adapté pour communiquer de façon sécurisée avec un serveur de gestion (4) via le réseau de communication mobile (3).

3. Système comprenant un dispositif (1) selon la revendication 2, un serveur de gestion (4), et au moins un équipement (2) connecté audit réseau local.

4. Procédé de routage de données par un dispositif (1) pour l'accès à un réseau étendu via un réseau de communication mobile (3), comprenant un premier module de connexion (30) au réseau de communication mobile (3), un deuxième module de connexion (31) adapté pour générer un réseau local, un module de traitement de données (11) et une carte d'identification d'abonné (12), le procédé étant **caractérisé en ce qu'**il comprend la mise en oeuvre par la carte d'identification d'abonné (12) d'étapes de :
(a) Réception d'une requête d'activation d'une connexion entre le premier et le deuxième module de connexion (30, 31) ;
(b) Génération d'un canal entre le premier et le deuxième module de connexion (30, 31) dans le module de traitement de données (11) ;
(c) Réception depuis un équipement (2) connecté audit réseau local d'au moins une information d'authentification ;
(d) Authentification de l'équipement (2) en fonction de ladite information d'authentification ;
(e) Ouverture dudit canal si l'équipement (2) est authentifié.

5. Procédé selon la revendication 4, dans lequel un serveur de gestion (4) est connecté au dispositif (1) via ledit réseau de communication mobile (3), l'étape (d) comprenant l'envoi à destination du serveur de gestion (4) d'une requête d'authentification comprenant ladite information d'authentification, et la réception depuis le serveur de gestion (4) d'une réponse de validation ou non de l'authentification.

6. Procédé selon la revendication 4, dans lequel un serveur de gestion (4) est connecté au dispositif (1) via ledit réseau de communication mobile (3), l'étape (d) comprenant la réception depuis le serveur de gestion (4) d'informations d'authentification de référence, et la comparaison entre l'au moins une information d'authentification reçue depuis l'équipement (2) et lesdites d'informations d'authentification de référence.

7. Procédé selon l'une des revendications 4 à 6, dans lequel est stockée sur la carte d'identification d'abonné (12) une page d'authentification permettant la saisie d'informations d'identification, l'étape (c) comprenant la transmission à l'équipement (2) de ladite page d'authentification.

8. Procédé selon l'une des revendications 4 à 7, dans lequel l'étape (a) comprend la réception et la vérification d'un numéro d'identification personnel (PIN) de la carte d'identification d'abonné (12) sur une interface utilisateur du dispositif (1).

9. Procédé selon l'une des revendications 4 à 8, dans lequel l'étape (b) comprend la fermeture de tout lien entre le premier et le deuxième module de connexion (30, 31) dans le module de traitement de données (11) autre que le canal.

10. Produit programme d'ordinateur comprenant des instructions de code pour l'exécution d'un procédé selon l'une des revendications 4 à 9 de routage de données par un dispositif (1) pour l'accès à un réseau étendu via un réseau de communication mobile (3).

11. Moyens de stockage lisibles par un équipement informatique sur lesquels un produit programme d'ordinateur comprend des instructions de code pour l'exécution d'un procédé selon l'une des revendications 4 à 9 de routage de données par un dispositif (1) pour l'accès à un réseau étendu via un réseau de communication mobile (3).

## Patentansprüche

1. Vorrichtung (1) für den Zugriff auf ein WAN über ein Mobilkommunikationsnetzwerk (3), umfassend ein erstes Verbindungsmodul (30) zum Verbinden mit dem Mobilkommunikationsnetzwerk (3), ein zweites Verbindungsmodul (31), das dazu eingerichtet ist, ein LAN zu erzeugen, ein Datenverarbeitungsmodul (11) und eine Teilnehmeridentifizierungskarte (12), wobei das Datenverarbeitungsmodul (11) dazu ausgebildet ist, das erste und das zweite Verbindungsmodul (30, 31) über einen Kanal zu verbinden, wobei die Vorrichtung (1) **dadurch gekennzeichnet ist, dass** die Teilnehmeridentifizierungskarte (12) dazu ausgebildet ist, einen Zugriffscontroller über einen in die Identifizierungskarte integrierten Authentifizierungsclient einzusetzen, der dazu eingerichtet ist, die Nutzung des Kanals zu kontrollieren.

2. Vorrichtung nach Anspruch 1, bei welcher der von der Teilnehmerkarte (12) eingesetzte Zugriffscontroller auch dazu eingerichtet ist, auf sichere Weise mit einem Verwaltungsserver (4) über das Mobilkommunikationsnetzwerk (3) zu kommunizieren.

3. System mit einer Vorrichtung (1) nach Anspruch 2, einem Verwaltungsserver (4) und mindestens einem mit dem LAN verbundenen Gerät (2).

4. Verfahren zum Routen von Daten über eine Vorrichtung (1) für den Zugriff auf ein WAN über ein Mobilkommunikationsnetzwerk (3), umfassend ein erstes Verbindungsmodul (30) zum Verbinden mit dem Mobilkommunikationsnetzwerk (3), ein zweites Verbindungsmodul (31), das dazu eingerichtet ist, ein LAN zu erzeugen, ein Datenverarbeitungsmodul (11) und eine Teilnehmeridentifizierungskarte (12), wobei das Verfahren **dadurch gekennzeichnet ist, dass** es die Durchführung der folgenden Schritte durch die Teilnehmeridentifizierungskarte (12) umfasst:
(a) Empfangen einer Anforderung zur Aktivierung einer Verbindung zwischen dem ersten und dem zweiten Verbindungsmodul (30, 31);
(b) Erzeugen eines Kanals zwischen dem ersten und dem zweiten Verbindungsmodul (30, 31) im Datenverarbeitungsmodul (11);
(c) Empfangen mindestens einer Authentifizierungsinformation von einem mit dem LAN verbundenen Gerät (2);
(d) Authentifizieren des Geräts (2) in Abhängigkeit von der Authentifizierungsinformation;
(e) Öffnen des Kanals, wenn das Gerät (2) authentifiziert wird.

5. Verfahren nach Anspruch 4, bei dem ein Verwaltungsserver (4) mit der Vorrichtung (1) über das Mobilkommunikationsnetzwerk (3) verbunden ist, wobei der Schritt (d) das Senden einer Authentifizierungsanforderung, welche die Authentifizierungsinformation umfasst, an den Verwaltungsserver (4) und das Empfangen einer Antwort zur Freigabe oder Nichtfreigabe der Authentifizierung vom Verwaltungsserver (4) umfasst.

6. Verfahren nach Anspruch 4, bei dem ein Verwaltungsserver (4) mit der Vorrichtung (1) über das Mobilkommunikationsnetzwerk (3) verbunden ist, wobei der Schritt (d) das Empfangen von Referenz-Authentifizierungsinformationen vom Verwaltungsserver (4) und das Vergleichen mindestens einer vom Gerät (2) empfangenen Authentifizierungsinformation mit den Referenz-Authentifizierungsinformationen umfasst.

7. Verfahren nach einem der Ansprüche 4 bis 6, bei dem auf der Teilnehmeridentifizierungskarte (12) eine Authentifizierungsseite gespeichert ist, die das Erfassen von Identifizierungsinformationen ermöglicht, wobei der Schritt (c) das Übertragen der Authentifizierungsseite an das Gerät (2) umfasst.

8. Verfahren nach einem der Ansprüche 4 bis 7, bei dem der Schritt (a) das Empfangen und das Überprüfen einer persönlichen Identifikationsnummer (PIN) der Teilnehmeridentifizierungskarte (12) auf einer Benutzerschnittstelle der Vorrichtung (1) umfasst.

9. Verfahren nach einem der Ansprüche 4 bis 8, bei dem der Schritt (b) das Schließen jeder Verbindung zwischen dem ersten und dem zweiten Verbindungsmodul (30, 31) in dem Datenverarbeitungsmodul (11) außer dem Kanal umfasst.

10. Computerprogrammprodukt mit Codeanweisungen zum Ausführen eines Verfahrens nach einem der Ansprüche 4 bis 9 zum Routen von Daten durch eine Vorrichtung (1) für den Zugriff auf ein WAN über ein Mobilkommunikationsnetzwerk (3).

11. Speichermittel, die von einer Computereinrichtung lesbar sind, auf denen ein Computerprogrammprodukt Codeanweisungen zum Ausführen eines Verfahrens nach einem der Ansprüche 4 bis 9 zum Routen von Daten über eine Vorrichtung (1) für den Zugriff auf ein WAN über ein Mobilkommunikationsnetzwerk (3) umfasst.

## Claims

1. Device (1) for accessing a wide area network via a mobile communication network (3), comprising a first connection module (30) for connecting to the mobile communication network (3), a second connection module (31) adapted to generate a local area network, a data processing module (11) and a subscriber identification card (12), the data processing module (11) being configured to connect the first and the second connection module (30, 31) via a channel, the device (1) being **characterized in that** the subscriber identification card (12) is configured to implement an access controller, through an authentication client embedded on said identification card, adapted to control the use of said channel.

2. Device according to Claim 1, in which said access controller implemented by the subscriber card (12) is also adapted to communicate in a secure manner with a management server (4) via the mobile communication network (3).

3. System comprising a device (1) according to Claim 2, a management server (4), and at least one equipment (2) connected to said local area network.

4. Method for routing data by a device (1) for accessing a wide area network via a mobile communication network (3), comprising a first connection module (30) for connecting to the mobile communication network (3), a second connection module (31) adapted to generate a local area network, a data processing module (11) and a subscriber identification card (12), the method being **characterized in that** it comprises the implementation by the subscriber identification card (12) of steps of:
(a) Reception of a request for activating a connection between the first and the second connection module (30, 31) ;
(b) Generation of a channel between the first and the second connection module (30, 31) in the data processing module (11);
(c) Reception from an equipment (2) connected to said local area network of at least one authentication information item;
(d) Authentication of the equipment (2) as a function of said authentication information item;
(e) Opening of said channel if the equipment (2) is authenticated.

5. Method according to Claim 4, in which a management server (4) is connected to the device (1) via said mobile communication network (3), step (d) comprising the sending to the management server (4) of an authentication request comprising said authentication information item, and the reception from the management server (4) of a response of validation or non-validation of the authentication.

6. Method according to Claim 4, in which a management server (4) is connected to the device (1) via said mobile communication network (3), step (d) comprising the reception from the management server (4) of reference authentication information items, and the comparison between the at least one authentication information item received from the equipment (2) and said of reference authentication information items.

7. Method according to one of Claims 4 to 6, in which an authentication page allowing the inputting of identification information items is stored on the subscriber identification card (12), step (c) comprising the transmission to the equipment (2) of said authentication page.

8. Method according to one of Claims 4 to 7, in which step (a) comprises the reception and the verification of a personal identification number (PIN) of the subscriber identification card (12) on a user interface of the device (1).

9. Method according to one of Claims 4 to 8, in which step (b) comprises the closing of any link between the first and the second connection module (30, 31) in the data processing module (11) other than the channel.

10. Computer program product comprising code instructions for the execution of a method according to one of Claims 4 to 9 for routing data by a device (1) for accessing a wide area network via a mobile communication network (3).

11. Storage means which can be read by a computerized equipment and on which a computer program product comprises code instructions for the execution of a method according to one of Claims 4 to 9 for routing data by a device (1) for accessing a wide area network via a mobile communication network (3).
